# EUROPEAN PATENT APPLICATION

(11) **EP 3 396 033 A1**
(43) Date of publication of application: **31.10.2018**
(21) Application number: 17167954.1
(22) Date of filing: 25.04.2017
(51) Int. Cl.: D01D 5/34, D01F 1/10, A41D 13/01, G02B 5/128

(54) **REFLECTIVE TEXTILE**

(71) Applicant: Moods of Norway AS, 6782 Stryn (NO)
(72) Inventor: Nilsson, Erik, 434 93 VALLDA (SE)
(74) Representative: AWA Sweden AB

(57) **Abstract**

The present invention relates to a method for fabricating a reflective textile comprising the steps of:
- providing a first polymer material
- providing a mixture comprising a second polymer material and a plurality of reflective beads each with a diameter of 5-70 µm, wherein said plurality of reflective beads constitutes at least 30 vol% of said mixture;
- forming a first and a second bi-component fiber each bi-component fiber comprising an inner core and a sheath layer by extruding said first polymer material as said inner core and extruding said mixture of said second polymer material and said plurality of reflective beads as a sheath layer arranged around said extruded first polymer material;
- melt-spinning said first and second bi-component fibers to a reflective yarn;
- fabricating said reflective textile using said reflective yarn.

## Description

### Technical field of the Invention

The invention relates to a reflective textile and a method of fabricating the same.

### Background of the Invention

Textiles which are retro-reflective, i.e. reflective textiles, are generally used in clothes worn whenever there is a need for increasing personal safety. Such clothes have for a long time been worn by a variety of professions, e.g. by polices, by road workers, by construction workers etc., but it is also commonly used by anyone wishing to be more visible when e.g. walking, running or bicycling, in traffic. In addition, it has recently become a fashion statement wearing clothes made from a reflective textile. The reflective textiles are not only used in clothes, these textiles may also be used in other products, such as signs, bags, accessories, sporting goods etc., used or worn by people desiring to be more visible in the dark. Hence, the demand for reflective textiles has lately grown tremendously.

Reflective textiles may be made from reflective yarns which may comprise one or several reflective fibers. As of today, there are two main techniques used for fabrication of such reflective yarn. The yarn can be fabricated by laminating a thin film of retro-reflective material on top of a polyester film which is cut into stripes or fibers. The stripes or fibers may subsequently be twisted together with a yarn made from another material. The reflective yarn may also be manufactured by coating a spun filament yarn with a retro-reflective material comprising adhesive and reflective beads. Both techniques are expensive and time consuming since they comprise many process steps. Due to the increased demands for reflective textiles the producing cost and times must be reduced and it is therefore a need for improving the current state-of-the-art regarding fabrication of reflective textiles.

### Summary of the Invention

It is an object of the present invention to improve the current state of the art and to mitigate at least some of the above mentioned problems. These and other objects are achieved by a method for fabricating a reflective textile.

According to a first aspect of the invention a method for fabricating a reflective textile is provided. The method comprises the steps of:
- providing a first polymer material
- providing a mixture comprising a second polymer material and a plurality of reflective beads each with a diameter of 5-70 µm, wherein said plurality of reflective beads constitutes at least 30 vol% of said mixture;
- forming a first and a second bi-component fiber comprising an inner core and a sheath layer by extruding said first polymer material as said inner core and extruding said mixture of said second polymer material and said plurality of reflective beads as a sheath layer arranged around said extruded first polymer material;
- melt-spinning said first and second bi-component fibers to a reflective yarn;
- fabricating said reflective textile using said reflective yarn.

The melt-spinning process described herein allows for a more cost-effective way for producing a reflective yarn and thereby a more cost-effective fabrication of reflective textile is achieved. The yarn is made from bi-component fibers comprising an inner core of an extruded first polymer material and a sheath layer extruded around the inner core, i.e. around the extruded first polymer material. The sheath layer comprises a second polymer material mixed with reflective beads.

It shall be understood that the reflective textile is retro-reflective. Hence, it increases the amount of electromagnetic radiation which is reflected back to the source as compared with textile not having retro-reflective properties. According to one example at least 50 %, or at least 60 %, or at least 70 % or at least 80 % of the incident sunlight energy is reflected by the textile. The light may be diffusely or/or specularly reflected, and the reflected rays may partially be parallel to the incident rays.

According to a least one example embodiment of the invention the retro-reflective properties of the textile is achieved by the reflective beads in the sheath layer of each fiber.

According to at least one example embodiment of the invention the reflective textile reflects radiation with wavelengths within the spectra of infrared radiation, visible light and/or ultra-violet radiation. Additionally, or alternatively, it may reflect radiation with a wavelength within the interval of 100-1000 nm, or within the interval of 300-800 nm, or within the interval of 400-700 nm.

According to at least one example embodiment of the invention the reflective textile fabricated according the method described herein may be used in a variety of applications. It may for example be used within the fashion industry for manufacturing of clothes and accessories, or it may be used in safety applications such as protective clothes. Moreover, it may for example be used in variety of products, e.g. signs or sport equipment, which need to be more visible in the dark or providing the user of the product to be more visible in the dark.

According to at least one example embodiment of the invention the reflective beads may be of a variety of geometrical shapes. For example, the reflective beads may be for example spheres, tetrahedrons, polyhedrons, rectangular prisms, cubes, cuboids, elliptical prisms, cones.

According to at least one example embodiment of the invention the inner core may comprise a pigment or dye. Hence, the first polymer material may be colored. The pigment or dye may be chosen in order to provide the reflective textile with any desired color.

According to at least one example embodiment of the invention the sheath layer may be transparent or semi-transparent. For example, may parts of the reflective beads be opaque and hence may the sheath layer not be fully transparent. The second polymer material may have transparent properties.

According to at least one example embodiment of the invention the reflective textile is a woven or a non-woven textile and wherein the step of fabricating a reflective textile comprises weaving or a non-woven technique such as knitting, braiding or felting.

A woven textile comprises two sets of threads which are interlaced at right angles. The set of threads is normally known as warp and weft.

In a non-woven textile, the yarn is bonded together, e.g. different strands of the yarn or different parts of the yarn is bonded together, by mechanical, thermal, chemical and/or solvent means in order to form a textile. Examples of non-woven techniques is knitting, braiding or felting.

According to at least one example embodiment of the invention the reflective yarn as manufactured by melt-spinning as described herein may be used alone or together with an additional yarn, which additional yarn may or may not have reflective properties, for fabricating the reflective textile.

According to at least one example embodiment of the invention said step of providing a mixture of said second polymer material and said plurality of reflective beads comprises a said step of mixing said second polymer material with said reflective beads at a mixing temperature within a range 150-350°C, or within a range of 200-300 °C, or within a range of 220-280 °C.

Additionally, or alternatively, the step of mixing the second polymer material with the plurality of reflective beads is performed at a mixing temperature of at least 150 °C, or at least 175 °C, or at least 200 °C, or at least 225 °C, or at least 250 °C. Additionally, or alternatively, the step of mixing the second polymer material with the reflective beads is performed at a mixing temperature lower than 350 °C, or lower than 325 °C, or lower than 300 °C, or lower than 275 °C, or lower than 250 °C, or lower than 225 °C.

According to at least one example embodiment of the invention the mixing temperature is defined by the temperature settings of the equipment, e.g. an extruder, used for the mixing. A predetermined temperature within the above mentioned ranges may typically be set to the equipment, e.g. the extruder.

According to at least one example embodiment of the invention the equipment used for mixing is an extruder, e.g. a twin screw extruder. This extruder may be divided into different heating zones, each heating zone having its own predetermined value. The heating zones may be set to same temperature or different temperatures within the above mentioned ranges.

According to at least one example embodiment of the invention said steps forming said first and second bi-component fiber comprises extruding said first polymer material and/or extruding said mixture of said second polymer material and said plurality of reflective beads at an extrusion temperature within in a range of 150-350°C, or within a range of 200-300 °C, or within a range of 220-280 °C. The extrusion temperature is determined by the extruder equipment which may typically be set to a predetermined value within the above mentioned ranges. The extrusion temperature of said first polymer material and said mixture of said second polymer material and said plurality of reflective beads may be the same or different, it may e.g. be in the same range of those mentioned above, or it may be in different ranges. Additionally, or alternatively, the extrusion of said first polymer material and/or said mixture of said second polymer material and the plurality of reflective beads is performed at an extrusion temperature of at least 150 °C, or at least 175 °C, or at least 200 °C, or at least 225 °C, or at least 250 °C. Additionally, or alternatively, the extrusion of said first polymer material and/or said mixture of said second polymer material and the plurality of reflective beads is performed at an extrusion temperature lower than 350 °C, or lower than 325 °C, or lower than 300 °C, or lower than 275 °C, or lower than 250 °C, or lower than 225 °C.

According to at least one example embodiment of the invention the extrusion temperature is defined by the temperature settings of the equipment, i.e. an extruder, used for the extrusion. A predetermined temperature within the above mentioned ranges may typically be set to the equipment, i.e. to the extruder.

According to at least one example embodiment of the invention said step of melt-spinning comprises melt-spinning of said first and second bi-component fibers at a melt-spinning temperature within the range of 150-350°C, or within a range of 200-300 °C, or within a range of 220-280 °C.

Additionally, or alternatively, the step of melt-spinning of the first and second bi-component fibers is performed at a melt-spinning temperature of at least 150 °C, or at least 175 °C, or at least 200 °C, or at least 225 °C, or at least 250 °C. Additionally, or alternatively, the step of melt-spinning of the first and the second bi-component fibers is performed at a melt-spinning temperature lower than 350 °C, or lower than 325 °C, or lower than 300 °C, or lower than 275 °C, or lower than 250 °C, or lower than 225 °C.

According to at least one example embodiment of the invention the melt-spinning temperature is defined by the temperature settings of the equipment, e.g. a spinneret, used for the melt-spinning. A predetermined temperature within the above mentioned ranges may typically be set to the equipment, e.g. a spinneret.

According to at least one example embodiment of the invention the steps of extruding and melt-spinning of said reflective fibers is performed in a melt-spinning line which at least comprises a first and a second extruder, a first and a second gear pump, a spinneret, a plurality of rollers and a winder.

According to at least one example embodiment of the invention the first extruder is extruding the first polymer material forming the core of a first bi-component fiber and the second extruder is extruding the mixture of the second polymer material and the reflective beads as a sheath layer around the inner core.

According to at least one example embodiment of the invention the first gear pump defines the extruding speed of the first extruder and the second gear pump defines the extruding speed of the second extruder.

According to at least one example embodiment of the invention the geometrical shape of the cross-section of each fiber may be defined in the spinneret. For example, the cross-section may be circular, or it may be a square.

According to at least one example embodiment of the invention the extruding speed of the first and the second extruder defines the speed of which the fibers leaves the spinneret.

According to at least one example embodiment of the invention the plurality of rollers comprises a take-off roller and a plurality of stretching rollers, e.g. a pair of bottom rollers, a pair of middle rollers and a pair of top roller. According to at least one example embodiment of the invention the take-off roller and the plurality of stretching rollers may spin with the same or with different speeds.

According to at least one example embodiment the temperature of the stretching rolls may be varied. The stretching rolls may have the same temperature or they may have different temperatures. According to at least one example embodiment of the invention the temperatures may be varied within the ration of 30-100 °C, or between 50-90 °C.

According to at least one example embodiment of the invention the fibers are drawn or stretched in their melted state during cooling and/or in their solid state, i.e. after cooling of the fibers. Depending on the choice it may for example be necessary to draw or stretch the fiber in the melted state.

According to at least one example embodiment of the invention the dimensions, such size of the area of the cross-section of each fiber, i.e. the thickness of the fiber, may be defined by the melt-draw ration and/or the solid-draw ration. The melt-draw ratio may be defined by the speed of which the fibers leave the spinneret and the speed of the take-off roller. The solid-draw ratio is defined by the speed of the take-off roller and a stretching roller, e.g. the speed of one of the top-rollers.

According to at least one example embodiment of the invention the spinneret can be used for manufacturing one or several bi-component fibers. For example, it may be used for manufacturing two, or three, or five, or ten, or twenty, or thirty fibers at once which a being melt-spun to a reflective yarn. The number of fibers corresponds to the number of holes in the spinneret.

According to at least one example embodiment of the invention said first extruder is extruding said first polymer material simultaneously as said second extruder is extruding said mixture of said second polymer material and said reflective beads around said inner core.

According to at least one example embodiment of the invention the first and/or the second extruder may be divided into different heating zones, each heating zone having its own predetermined temperature. The heating zones may be set to same temperature or different temperatures within the above mentioned ranges.

According to at least one example embodiment of the invention said first and/or second polymer material comprises a polymer which is chosen from a group comprising polyamides, polyesters, polyolefins and thermoplastic polyurethanes and wherein said polymer of said first material and said polymer of said second material may be the same or different.

According to at least one example embodiment of the invention the polymer first polymer material may be a polyamide, e.g. polyamide 6. Polyamides, e.g. nylons, are commonly used in yarns and textiles and hence it is a suitable material for a reflective textile.

According to at least one example embodiment of the invention the second polymer material may be a polyester, e.g. polyethylene therephthalate (PET) or it may be a polyamide, e.g. polyamide 6.

According to at least one example embodiment of the invention said reflective beads have a diameter in the range of 20-60 µm, or in the range of 20-40 µm, or in the range of 25-35 µm. The size of the reflective beads affects the spinnability of the fibers since the size of the reflective beads in the mixture comprising the second polymer material and the reflective beads alters the viscosity of the mixture. Moreover, the texture and hence the feeling of the fiber surface may vary depending on the size of the reflective beads in the sheath layer.

Additionally, or alternatively, the reflective beads may have a diameter of at least 20 µm, or at least 25 µm, or at least 30 µm, or at least 35 µm. Additionally, or alternatively, the reflective beads may have a diameter of at most 60 µm, or at most 55 µm, or at most 50 µm, or at most 45 µm, or at most 40 µm, or at most 35 µm.

According to at least one example embodiment of the invention the amount of said reflective beads in said mixture of said second polymer material and said plurality of reflective beads is at least 35 vol %, or at least 40 vol%, or at least 45 vol%, or at least 50 vol%. The relative content of the reflective beads in the sheath layer affects the spinnability of the fibers since the amount of the reflective beads in the mixture comprising the second polymer material and the reflective beads alters the viscosity of the mixture. Moreover, the texture and hence the feeling of the fiber surface may vary depending on the relative content of reflective beads in the sheath layer.

According to at least one example embodiment of the invention the reflective beads may be made from a variety of materials. For example, the reflective beads may be glass beads or plastic beads. Plastic beads may for example be made from a polymer material, e.g. polystyrene or a polyacrylate, e.g. poly(methyl methacrylate).

According to at least one example embodiment of the invention the reflective beads may comprise a reflective metal layer giving the reflective beads their retro-reflective properties. The metal layer may for example be aluminum. Additionally, or alternatively, the reflective beads may comprise metal flakes enhancing the retro-reflective properties. The metal flakes may for example be made from aluminum.

According to at least one example embodiment of the invention the reflective beads is glass beads comprising a reflective metal layer, which reflective metal layer optionally comprises aluminum.

According to at least one example embodiment of the invention the reflective beads is partially or fully coated with the metal layer. For example, spherical reflective beads may be hemispherically coated with the metal layer. Hence, the metal layer is covering half of the surface of the spherical reflective bead.

According to at least one example embodiment of the invention said inner core and/or said sheath layer further comprises metal flakes and/or pigment.

According to at least one example embodiment, the inner core may further comprise metal flakes for enhancing the retro-reflective properties of the reflective textile.

According to at least one example embodiment of the invention the sheath layer may be transparent or semi-transparent. To ensure that the electromagnetic rays reach the reflective beads closest to the inner core.

According to at least one example embodiment of the invention the inner core may comprise one or several pigments giving the bi-component fiber a desired color. In other words, the pigment(s) is used to achieve a desired appearance of the reflective textile.

According to a second aspect of the invention a reflective textile comprising a reflective yarn is provided. The reflective yarn comprises at least comprises at least two bi-component fibers, which fibers comprises an inner core comprising a first polymer material and a sheath layer comprising a second polymer material and a plurality of reflective beads each with a diameter of 5-70 µm;
wherein said plurality of said reflective beads constitutes at least 30 vol% of said reflective yarn.

Effects and features of this second aspect of the present invention are largely analogous to those described above in connection with the first aspect of the inventive concept. Embodiments mentioned in relation to the first aspect of the present invention are largely compatible with the second aspect of the invention.

According to at least one example embodiment of the invention said first and second polymer material comprises a polymer which is chosen from a group comprising polyamide, polyester, polyolefins and thermoplastic polyurethanes and wherein said polymer is chosen independently for said first polymer material and for said second polymer material.

According to at least one example embodiment of the invention said reflective textile is provided by weaving and/or a non-woven technique, such as knitting, braiding or felting.

According to at least one example embodiment of the invention said inner core comprises a pigment or a dye and wherein said sheath layer transparent or semi-transparent.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 shows a schematic view of a method for fabricating a reflective textile in accordance with at least one embodiment of the invention;
Fig. 2 shows a schematic view of a melt-spinning line in accordance with at least one embodiment of the invention;
Fig. 3a shows a cross-sectional view of a reflective fiber in accordance with at least one embodiment of the invention;
Fig. 3b shows a photograph of two reflective fibers in accordance with at least one embodiment of the invention;
Figs. 4a and 4b shows a roll of reflective fiber in accordance with at least one embodiment of the invention;
Figs. 5a-g shows knitted textiles in accordance with at least one embodiment of the invention.

### Detailed description of the drawings

In the present detailed description, embodiments of the present invention will be discussed with reference to the accompanying figures. It should be noted that this by no means limits the scope of the invention, which is also applicable in circumstances for instance with other types or variants of methods for producing a reflective textile, other than the embodiments shown in the appended drawings. Further, that specific features are mentioned in connection to an embodiment of the invention does not mean that those components cannot be used to an advantage together with other embodiments of the invention.

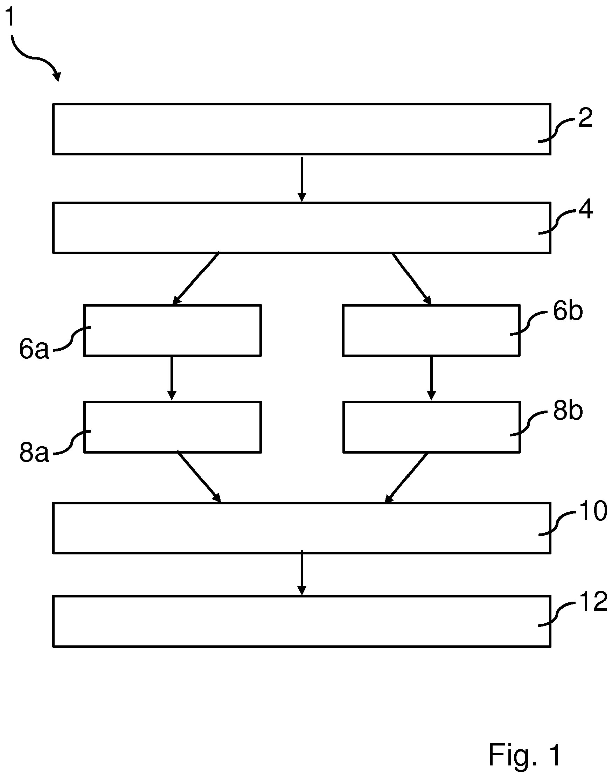

Fig. 1 shows a schematic view of a method 1 for fabricating a reflective textile.

A first step 2 of the method comprises providing a first and a second polymer material and a plurality of reflective beads with a diameter of 5-70 µm. Subsequently, in a next step 4, the second polymer material will be mixed with the plurality of reflective beads. The mixture achieved in this step 4 may comprise at least 30 vol% of reflective beads. This step 4 may be performed in a twin screw extruder at a temperature in a range of 150-350 °C. The extruded material is subsequently solidified in water and pelletized in a strand cutter.

The first polymer material is provided to a first extruder from which it is extruded 6a to form an inner core of a first fiber. Subsequently, or simultaneously, the first material is extruded 8a to form an inner core of a second fiber. The mixture of the second polymer and the reflective beads is provided to a second extruder from which it is extruded 6b to form a sheath layer of the first fiber such that a first bi-component fiber is formed. Subsequently, or simultaneously, the mixture of the second polymer and the reflective beads is extruded 8b to for a sheath layer of the second fiber such that a second bi-component fiber is formed. The mixture of the second polymer and the reflective beads may be extruded 6b,8b simultaneously or subsequently as the first material is extruded 6a,8a to form the inner core of the fibers. These steps of extruding 6a,6b,8a,8b is performed within a temperature range of 150-350 °C. All steps may be performed at the same temperature or they may be performed at different temperatures depending on the material choice of the first and the second polymer material. Further, the temperature may or may not vary during the extrusion. In other words, the temperature may be different in different zones of the extruder or the temperature may be the same at these zones.

The first and the second fiber will subsequently be melt-spun 10 to provide a reflective yarn. This may be done by passing a spinneret at a temperature within in the range of 150-350 °C. As the last step of the method 12, the reflective yarn is used to fabricate a reflective textile. Depending on the type of reflective textile, i.e. depending on if the reflective textile is a woven or non-woven textile, the step of fabricating 12 the reflective textile may be e.g. knitting, weaving or embodying.

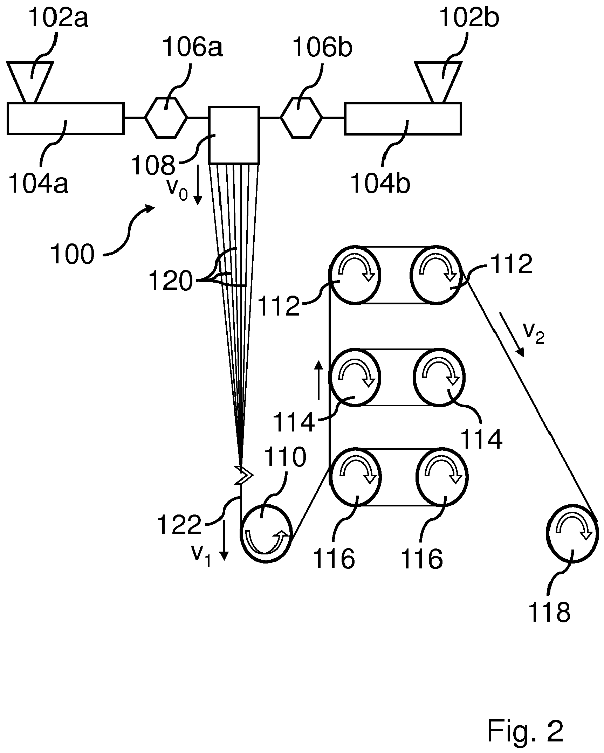

Fig. 2 shows a melt-spinning line 100 which is used for producing a reflective yarn which may be used for fabricating a reflective textile. The melt-spinning line comprises a first 104a and a second extruder 104b, a first 106a and a second gear pump 106b, a spinneret 108, a take-off roller 110, a plurality of stretching rollers 112,114,116 and a winder 118. The first 104a and the second extruder 104b further comprise respective feeding equipment 102a,102b. The plurality of stretching rollers comprises two bottom rollers 116, two middle rollers 114 and two top rollers 112.

The first polymer will be provided to the feeding equipment 102a of the first extruder 104a. The first polymer material is extruded from the first extruder 104a and fed to the first gear pump 106a. Subsequently, the first polymer material is feed to the spinneret 108. The mixture of the second polymer material and the reflective beads is provided to the feeding equipment 102b of the second extruder 104b. The mixture is extruded from the second extruder 104b and fed to the second gear pump 106b. Subsequently, the mixture is feed to the spinneret 108. The spinneret 108 is configured to melt-spinning of a plurality of bi-component fibers. The plurality of fibers 102 leaving the spinneret 108 is melt-spun into a reflective yarn 122. The volumetric speed of the fibers when leaving the spinneret 108 are given by the first and second gear pump 106a, 106b. As the fibers 102 are being spun to a yarn 122, they are also stretched or drawn in their melted state between the spinneret 108 and the take-off roller 110. The melt-draw ratio v₁/v₀ is defined by the volumetric speed v₀ of the fibers 102 when leaving the spinneret 108 and the linear speed v₁ of the take-off roller. Simultaneously, the plurality fibers 120 are cooled and thereby solidified.

After passing the take-off roller 110, the yarn 122 is stretched or drawn in its solid state between the take-off roller 110 and the top rollers 112. The solid-draw ratio v₂/v₁ is defined by the linear speed v₁ of the take-off roller 110 and the linear speed v₂ of the top rollers 112.

The melt-draw ratio v₁/v₀ and the solid-draw ratio v₂/v₁ may be to varied to produce a reflective yarn 122 with desired dimensions and the desired strength. For example, the process may need to be adapted to e.g. different material choice so that desired yarn dimensions are achieved. Such an adaption may be done by changing the melt-draw ratio v₁/v₀ and the solid-draw ratio v₂/v₁ may be to varied. Hence, the process may be adapted to the choice of material by changing the speeds of the take-off roller 110 and/or the top rollers 112. Moreover, for some materials there may not be a need for the solid state drawing since the desired dimension and strength may be achieved by solely the stretching or drawing in the melted state.

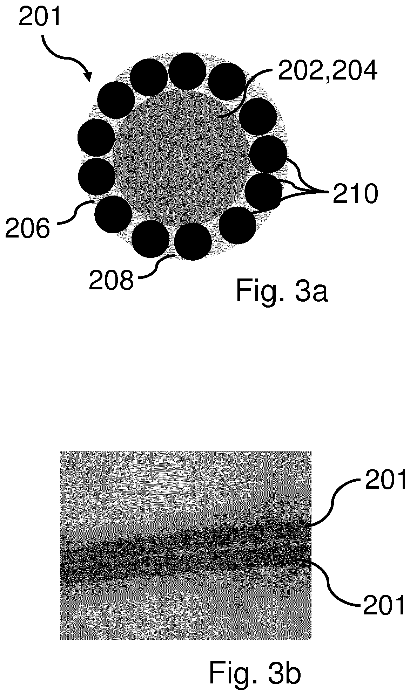

Fig. 3a shows a schematic, cross-sectional view of a reflective fiber 201 and Fig. 3b shows a micrograph of two such reflective fibers 201. The fiber comprises a core 202 comprising a first polymer material 204, a sheath layer 206 comprising a second polymer material 208 and reflective beads 210.

The first polymer material 204 comprises a polymer which is chosen from a group comprising polyamides, polyesters, polyolefins and thermoplastic polyurethanes. For example, the first polymer material 204 may comprise polyamide 6 (PA6). The second polymer material 206 comprises a polymer which is chosen from a group comprising polyamides, polyesters, polyolefins and thermoplastic polyurethanes. For example, the second polymer material 206 may comprise polyethylene terephthalate (PET).

The reflective beads 210 may be glass beads comprising a reflective metal layer, which reflective metal layer optionally comprises aluminum have The diameter of the reflective beads may be in the range of 5-70 µm, or in the range of 20-60 µm, or in the range of 25-50 µm. The sheath layer 206 may comprise at least 35 vol % of reflective beads 210, or at least 40 vol% of reflective beads 210, or at least 45 vol% of reflective beads 210, or at least 50 vol% of reflective beads 210.

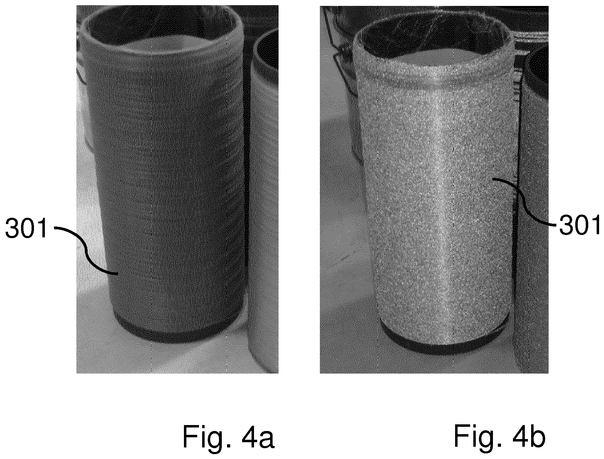

Figs. 4a and 4b shows photographs of a roll of reflective yarn 301. In Fig. 4b the roll 301 is illuminated and the light is being reflected by the reflective beads in the reflective yarn.

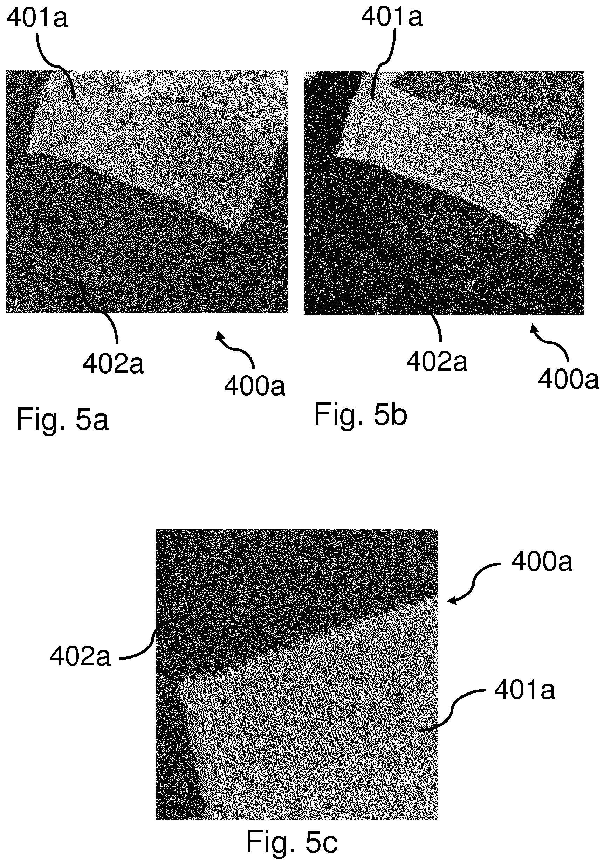

Figs. 5a-g shows photographs of knitted textiles produced with a reflective yarn. The knitted textiles were produced in an industrial flat knitting machine.

Figs. 5a-c show a textile 400a knitted with reflective yarn and wool yarn where the reflective yarn is used to form the red area 401 a. The wool yarn is used to form the blue area 402a. The textile 400a is a tubular knit with a layer of wool behind the reflective knit and with a fineness of 10 gauge (GG). The photograph shown in Fig. 5a was taken without a flash. In Fig. 5b, the textile is illuminated by the flash of the camera and the light is being reflected by the reflective beads in the reflective yarn as seen in the change in contrast between the red 401 a and the blue area 402a when comparing Fig. 5a and 5b. Fig. 5c shows a close up of the knitted textile.

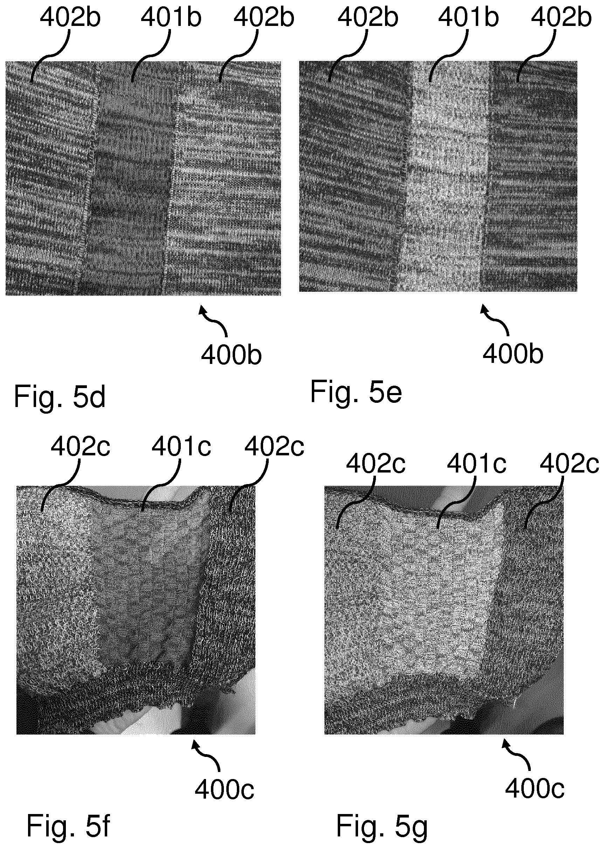

Figs. 5d-e show a textile 400b knitted with a mix of reflective yarn and wool yarn (melange yarn), where the mix of reflective yarn and wool yarn is used to form the red area 401 b. The grey areas 402b are knitted with only a wool yarn. Hence, the grey areas 402b do not comprise any reflective yarn. The textile 400b is a tubular knit with a layer of wool behind the reflective knit and with a fineness of 10 gauge (GG). The photograph shown in Fig. 5d was taken without a flash. In Fig. 5e, the textile is illuminated by the flash of the camera and the light is being reflected by the reflective beads in the reflective yarn as seen in the change in contrast between the red 401 b and the grey areas 402b when comparing Fig. 5d and 5e.

Figs. 5f-g show a textile 400c knitted with a mix of reflective thread and wool thread (melange yarn) where the mixture of the reflective yarn and the wool yarn is used to form the area 401 c. The grey areas 402b are knitted with only a wool yarn. Hence, the grey areas 402b do not comprise any reflective yarn. The textile 400c is a chess knit with a fineness of the textile of 10 gauge (GG). The photograph shown in Fig. 5f was taken without a flash. In Fig. 5g, the textile is illuminated by the flash of the camera and the light is being reflected by the reflective beads in the reflective yarn as seen in the change in contrast between the red 401 c and the grey areas 402c when comparing Fig. 5f and 5g.

The skilled person realizes that a number of modifications of the embodiments described herein are possible without departing from the scope of the invention, which is defined in the appended claims. For instance, the steps of the method may be combined differently. For example, there may be more steps, other than what is described above, which may be performed simultaneously. Further, all steps may be performed after each other. Moreover, the method may comprise additional steps, e.g. the method may comprise a step of mixing said first polymer material with a dye.

### Example

### Materials

The polymer used in the core, i.e. the first polymer material, was Polyamide 6, Ultramid B33L obtained from BASF, Germany with a density of 1130 kg/m³. The polymer used in the sheath mixture, i.e. the second polymer material, was Polymamide 6, Ultramid B24 N 03 obtained from BASF Germany with a density of 1120-1150 kg/m³.

Trials with 3 different types of glass beads were made:
1) Hemispherically aluminum coated barium titanate glass microspheres, P2453BTA obtained from Prizmalite USA with an average diameter of 40-50 µm and a specific gravity of 4490 kg/m³.
2) Uncoated glass beads Omicron NP5 with an average mean size of 5-9 µm obtained from Sovitec, Belgium.
3) Uncoated Barium titante glass microspheres, 25-32 µm obtained from Chengdu CECEP Reflective Materials CO.,Ltd., china.

All data as given by the suppliers.

### Composite manufacturing (mixing of the second polymer material and the reflective beads)

The mixture comprising the second polymer material and the reflective beads was compounded using a Coperion (ZSK 26 K 10,6, Germany) co-rotational twin screw extruder with 10 heating zones. The barrel temperature profile was set to: zone 1: 240°C and zones 2-10: 240°C, starting from the hopper inlet. The screw speed was 230 rpm. The relative content of beads was controlled by adjusting the feeding rate of the polymer and beads, the total throughput being set to 10 kg/h. The extrudate was solidified in a water bath and pelletized using a strand cutter. The final bead content was 50 vol%.

### Bi-component fiber manufacturing

Bi-component fiber spinning was performed using a melt spinning line from Extrusion Systems Limited (ESL, Leeds, England), schematically shown in Fig 2. Fibers, manufactured as described in the section above, were spun at different combinations of the melt-draw ratio (*MDR= V₁*/*V₀*), the solid-draw ratio (*SSDR*=*V₂*/*V₁*). In addition, the temperatures of the stretching rolls may be varied. The diameter of the fibers produced was controlled by the total draw ratio (*MDRxSSDR*) through the entire system.

The temperature settings were as follows:
Extruder 1 (core) zones 1, 2 and 3: 210°C, 270°C and 270°C, respectively.
Extruder 2 (sheath) zones 1, 2 and 3: 220°C, 270°C and 270°C, respectively.
The temperature of the spinneret and the gear pumps was set to 270°C.

Spinning parameters for the fiber manufacturing is presented in Table 1. Table 2 shows fiber properties of fibers with a core/sheath ratio of 60/40 and 50 vol% glass beads (type 1) in the sheath produced according to the parameters in Table 1.

**Table 1 Spinning parameters for the fibers produced.**

| | |
|---|---|
| First gear pump (core) | |
| - speed (rpm) | 8 |
| Second gear pump (sheath) | |
| - speed (rpm) | 5 |
| Total Flow rate (cm³/min) Take-off roller, | 31.2 |
| - linear speed (m/min) | 401-1192 |
| Bottom roller | |
| - linear speed (m/min) | 422-1255 |
| - temperature (°C) | 90 |
| Middle roller | |
| - linear speed (m/min) | 633-1265 |
| - temperature (°C) | 90 |
| Top roller | |
| - linear speed (m/min) | 645-1290 |
| Draw ratio (V₂/V₁) | 1,0-2,0 |

**Table 2 Fiber properties.**

| **Yarn titer (dtex)/SSDR** | **Fiber titer (dtex)** | **Force (cN)** | **Elongation (%)** |
|---|---|---|---|
| **400/1,0** | 32 | 18 | 78 |
| **400/1,5** | 38 | 26 | 61 |
| **400/2,0** | 34 | 27 | 31 |
| **600/1,0** | 45 | 19 | 87 |
| **600/1,5** | 47 | 27 | 71 |
| **600/2,0** | 48 | 29 | 48 |
| **800/1,0** | 63 | 18 | 60 |
| **800/1,5** | 64 | 19 | 46 |

## Claims

1. A method for fabricating a reflective textile comprising the steps of:
- providing a first polymer material
- providing a mixture comprising a second polymer material and a plurality of reflective beads each with a diameter of 5-70 µm, wherein said plurality of reflective beads constitutes at least 30 vol% of said mixture;
- forming a first and a second bi-component fiber each bi-component fiber comprising an inner core and a sheath layer by extruding said first polymer material as said inner core and extruding said mixture of said second polymer material and said plurality of reflective beads as a sheath layer arranged around said extruded first polymer material;
- melt-spinning said first and second bi-component fibers to a reflective yarn;
- fabricating said reflective textile using said reflective yarn.

2. The method according to claim 1, wherein the reflective textile is a woven or a non-woven textile and wherein the step of fabricating a reflective textile comprises weaving or a non-woven technique such as knitting, braiding or felting.

3. The method according to any one of the preceding claims, wherein said step of providing a mixture of said second polymer material and said plurality of reflective beads comprises a step of mixing said second polymer material with said reflective beads at a mixing temperature within a range 150-350°C, or within a range of 200-300 °C, or within a range of 220-280 °C.

4. The method according to any one of the preceding claims, wherein said step of forming said first and second bi-component fiber comprises extruding said first polymer material and/or said mixture of said second polymer material and said reflective beads at an extrusion temperature within in a range of 150-350°C, or within a range of 200-300 °C, or within a range of 220-280 °C.

5. The method according to any one of the preceding claims, wherein said step of melt-spinning comprising melt-spinning of said first and second bi-component fiber at a melt-spinning temperature within the range of 150-350°C, or within a range of 200-300 °C, or within a range of 220-280 °C.

6. The method according to any one of the preceding claims, wherein the steps of extruding and melt-spinning of said reflective fibers is performed in a melt-spinning line which at least comprises a first and a second extruder, a first and a second gear pump, a spinneret, a plurality of rollers and a winder;
wherein said first extruder is extruding said first polymer material simultaneously as said second extruder is extruding said mixture of said second polymer material and said reflective beads around said inner core.

7. The method according to any one of the preceding claims, wherein said first and/or second polymer material comprises a polymer which is chosen from a group comprising polyamides, polyesters, polyolefins and thermoplastic polyurethanes; and wherein the polymer of said first material and the polymer of said second material may be the same or different.

8. The method according to any one of the preceding claims, wherein said reflective beads have a diameter in the range of 20-60 µm, or in the range of 20-40 µm, or in the range of 25-35 µm.

9. The method according to any one of the preceding claims, wherein the amount of said reflective beads in said mixture of said second polymer material and said plurality of reflective beads is at least 35 vol %, or at least 40 vol%, or at least 45 vol%, or at least 50 vol%.

10. The method according to any one of the preceding claims, wherein the reflective beads are glass beads comprising a reflective metal layer, which reflective metal layer optionally comprises aluminum.

11. The method according to any one of the preceding claims, wherein said core and/or said sheath layer further comprises metal flakes and/or pigment.

12. A reflective textile comprising a reflective yarn;
wherein said reflective yarn comprises at least two bi-component fibers, which fibers comprises an inner core comprising a first polymer material and a sheath layer comprising a second polymer material and a plurality of reflective beads each with a diameter of 5-70 µm;
wherein said plurality of said reflective beads constitutes at least 30 vol% of said reflective yarn.

13. The reflective textile according to claim 12, wherein said first and second polymer material comprises a polymer which is chosen from a group comprising polyamide, polyester, polyolefins and thermoplastic polyurethanes; and
wherein said polymer is chosen independently for said first polymer material and for said second polymer material.

14. The reflective textile according to any one of claims 12-13, wherein said reflective textile is provided by weaving and/or a non-woven technique, such as knitting, braiding or felting.

15. The reflective textile according to any one of claims 12-14, wherein said inner core comprises a pigment or a dye and wherein said sheath layer transparent or semi-transparent.
